# EUROPEAN PATENT APPLICATION

(11) **EP 2 549 367 A2**
(43) Date of publication of application: **23.01.2013**
(21) Application number: 11195936.7
(22) Date of filing: 28.12.2011
(51) Int. Cl.: G06F 3/048

(54) **Mobile device and control method thereof**

(30) Priority: 18.07.2011 KR 20110071123
(71) Applicant: LG Electronics Inc., Seoul (KR)
(72) Inventor: HA, Yusol, Seoul (KR); HYUN, Juha, Seoul (KR)
(74) Representative: TER MEER - STEINMEISTER & PARTNER GbR

(57) **Abstract**

In a mobile terminal capable of executing applications and a control method thereof, the control method includes generating a folder including at least one application, setting a representative image of the folder and displaying the folder on a display unit using the set representative image, and outputting an icon of the application included in the folder, in response to selection of the representative image.

## Description

### FIELD OF THE INVENTION

This specification relates to a mobile device (mobile terminal, portable terminal, portable device) capable of executing applications and a control method thereof.

### BACKGROUND OF THE INVENTION

Mobile device (mobile terminal, portable device, portable terminal) can be easily carried and have one or more of functions such as supporting voice and video telephony calls, inputting and/or outputting information, storing data and the like.

As it becomes multifunctional, the mobile terminal can be allowed to capture still images or moving images, play music or video files, play games, receive broadcast and the like, so as to be implemented as an integrated multimedia player.

Various new attempts have been made for the multimedia devices by hardware or software in order to implement such complicated functions.

Furthermore, many efforts are undergoing to support or enhance various functions of such mobile terminals. Such many efforts include not only changes and improvement of structural components implementing a mobile terminal but also software or hardware improvement.

When all of applications downloaded using a mobile terminal are displayed on a display unit, as the number of applications downloaded increases, the screen of the display unit becomes complicated.

### SUMMARY OF THE INVENTION

Therefore, an aspect of the detailed description is to provide a mobile terminal capable of reducing complexity of a display unit due to displaying of a plurality of icons, and a control method thereof.

To achieve these and other advantages and in accordance with the purpose of this specification, as embodied and broadly described herein, there is provided a method for controlling a mobile terminal including generating a folder including at least one application, setting a representative image of the folder and displaying the folder on a display unit using the set representative image, and outputting an icon of the application included in the folder, in response to selection of the representative image.

In one aspect of the present disclosure, the display representative image may be converted into the icon of the application when the representative image is selected.

In another aspect, the conversion may be carried out as the representative image is slid.

In another aspect, the folder may include a first region where the icon of the application is displayed, and a second region where the representative image is displayed. Preferably sizes of the first region and/or the second region may change in cooperation with each other. Preferably, the size change may be based on sliding of the representative image.

In another aspect, the sliding may be based on a touch input given by one of sliding, flicking and dragging with respect to the representative image.

In another aspect, a first function associated with the folder may be executed when a first touch is input on the representative image, and a second function associated with the folder may be executed when a second touch, different from the first touch, is input on the representative image.

In another aspect, the function may be one of a folder locking function, a folder unlocking function, a folder moving function, a representative image setting function, a representative image deleting function and a folder displaying converting function.

In another aspect, the first function may be a function of converting the displayed representative image into the icon of the application, and the second function may be a function of changing the displayed representative image into another image.

In another aspect, when an event is generated in the application included in the folder, the displayed representative image may be converted into an icon of the event-generated application, or the icon of the event-generated application may be displayed with overlapping the representative image.

In another aspect, when a touch input is detected on the folder including the event-generated application, the event-generated application may be executed.

In another aspect, when events are generated from a plurality of applications, icons of the event-generated applications may be displayed in an enlarged state, in response to a touch input with respect to the folder including the event-generated applications, and a screen of the display unit may be converted into an execution screen of an application corresponding to one selected icon of the enlarged icons.

In another aspect, event information related to contents of the event may be displayed on the folder.

In another aspect, at the displaying step, a type of application included in the folder may be analyzed, an image associated with the analyzed type may be retrieved, and the retrieved image may be set as the representative image.

In another aspect, when a plurality of images are retrieved, one of the retrieved images may be set as the representative image based on at least one reference of setting frequency, saved date and used date of the retrieved images.

In another aspect, when a plurality of images are retrieved, the retrieved plurality of images may be displayed, and one of the displayed images selected by a user may be set as the representative image.

In another aspect, at the folder generating step, when the type of application included in the folder satisfies a preset reference, a condition to open the folder may be set for the folder.

In another aspect, the condition may be an input of a preset number or a preset touch.

To achieve these and other advantages and in accordance with the purpose of this specification, as embodied and broadly described herein, there is provided a mobile terminal including a display unit to display a folder including at least one application using a preset representative image, and a controller to convert the representative image into an icon of the application included in the folder when the displayed representative image is selected.

In one aspect, the folder may include a first region where the icon of the application is displayed, and a second region where the representative image is displayed, sizes of the first region and the second region may change in cooperation with each other. Here, the size change may be based on sliding of the representative image.

In another aspect, the controller may execute a first function associated with the folder when a first touch is input on the representative image, and execute a second function associated with the folder when a second touch, different from the first touch, is input on the representative image.

In another aspect, when an event is generated in the application included in the folder, the controller may convert the displayed representative image into an icon of the event-generated application, or overlap the icon of the event-generated application with the representative image.

In another aspect, the controller may analyze a type of application included in the folder, retrieve an image associated with the analyzed type, and set the retrieved image as the representative image.

In another aspect, the controller may set a condition to open the folder in the folder when the type of application included in the folder satisfies a preset reference.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal in accordance with one exemplary embodiment;
FIG. 2 is a flowchart showing a control method for a mobile terminal in accordance with one exemplary embodiment;
FIG. 3 is an overview showing the control method for the mobile terminal in accordance with the one exemplary embodiment;
FIGS. 4A and 4B are overviews showing a method for displaying icons included in a folder in the mobile terminal;
FIGS. 5A and 5B are overviews showing various functions of a folder according to touch inputs in the mobile terminal;
FIGS. 6A to 6C are overviews showing a method for displaying an application with a new event generated therein in the mobile terminal;
FIGS. 7A and 7B are overviews showing a method for setting a representative image according to a type of application in the mobile terminal;
FIG. 8 is an overview showing a method for setting the same image as a representative image with respect to a plurality of folders in the mobile terminal.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated. Hereinafter, suffixes "module" and "unit or portion" for components used herein in description are merely provided only for facilitation of preparing this specification, and thus they are not granted a specific meaning or function. In describing the present invention, if a detailed explanation for a related known function or construction is considered to unnecessarily divert the gist of the present disclosure, such explanation has been omitted but would be understood by those skilled in the art. The accompanying drawings are used to help easily understood the technical idea of the present invention and it should be understood that the idea of the present disclosure is not limited by the accompanying drawings.

Mobile terminals described in this specification may include cellular phones, smart phones, laptop computers, digital broadcasting terminals, personal digital assistants (PDAs), portable multimedia players (PMPs), navigators, and the like. However, it may be easily understood by those skilled in the art that the configuration according to the exemplary embodiments of this specification can be applied to stationary terminals such as digital TV, desktop computers and the like excluding a case of being applicable only to the mobile terminals.

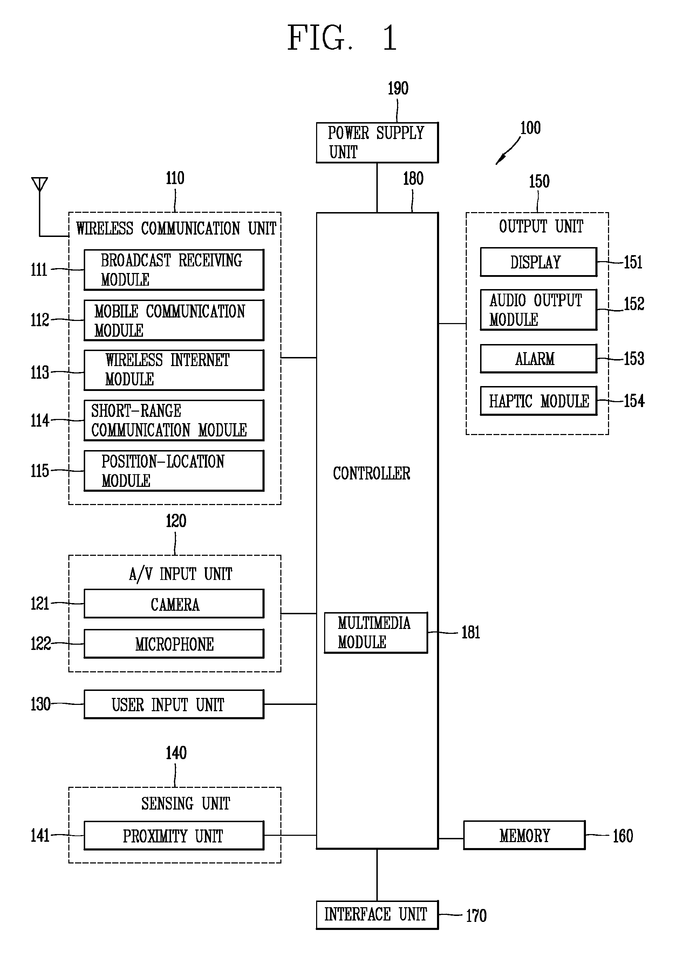

FIG. 1 is a block diagram of a mobile terminal 100 in accordance with one exemplary embodiment.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH™, Radio Frequency IDentification (RFID), Infrared Data Association (IrDA), Ultra-WideBand (UWB), ZigBee™, and the like.

The location information module 115 denotes a module for detecting or calculating a position of a mobile terminal. An example of the location information module 115 may include a Global Position System (GPS) module.

Referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device. The sensing unit 140 may include a proximity sensor 141.

The output unit 150 is configured to output an audio signal, a video signal or a tactile signal. The output unit 150 may include a display unit 151, an audio output module 152, an alarm unit 153 and a haptic module 154.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the displays 151 may be arranged on one surface to be spaced apart from or integrated with each other, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm unit 153 outputs signals notifying occurrence of events from the mobile terminal 100. The events occurring from the mobile terminal 100 may include call received, message received, key signal input, touch input, and so on. The alarm unit 153 may output not only video or audio signals, but also other types of signals such as signals notifying occurrence of events in a vibration manner. Since the video or audio signals can be output through the display unit 151 or the audio output module 152, the display unit 151 and the audio output module 152 may be categorized into a part of the alarm unit 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals input from the cradle by a user to the mobile terminal 100. Such various command signals or power input from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

Also, the controller 180 may execute a lock state, in which a user is restricted from inputting a control command for applications, when a state of the mobile terminal satisfies a preset condition. The controller 180 may control a lock screen, which is displayed in the lock state, based upon a touch input detected on the display unit 151 (hereinafter, referred to 'touch screen') in the lock state.

The power supply 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, microprocessors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations.

The software codes can be implemented with a software application written in any suitable programming language. Also, the software codes may be stored in the memory 160 and executed by the controller 180.

Also, the controller 180 may display a folder including at least one application on the display unit 151 using a preset representative image.

Here, the representative image may be an image for indicating the folder on the display unit 151. The representative image may be displayed on an entire region where the folder is displayed or on a part of the folder.

When detecting a user selection on the representative image, the controller 180 may display on the display unit 151 an icon of an application included in the folder indicated with the representative image, so as to provide the user with information relating to the application included in the folder.

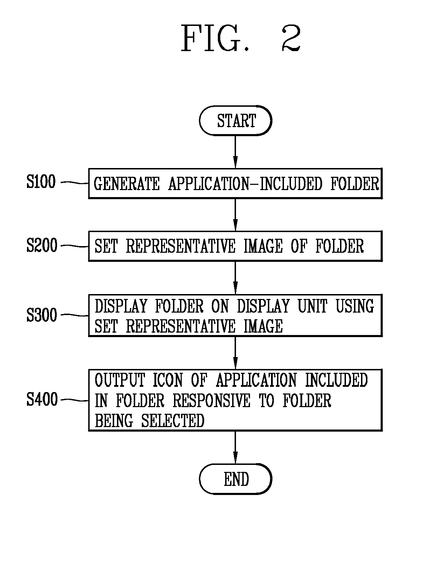

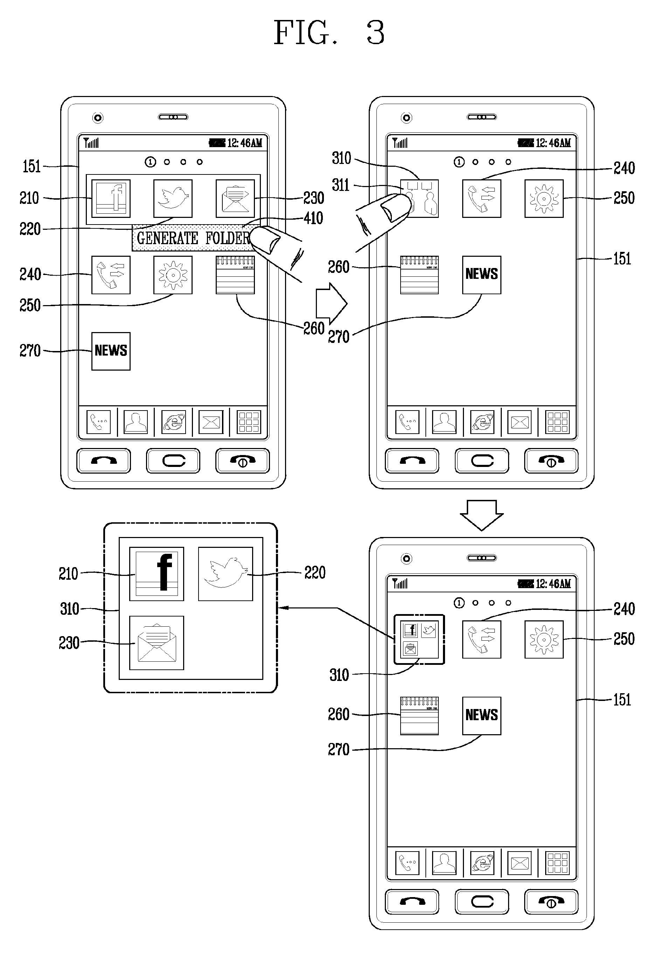

Hereinafter, with reference to FIGS. 2 and 3, description will be given of an exemplary method for generating a folder and displaying the folder using a representative image in the mobile terminal 100.

FIG. 2 is a flowchart showing a control method for a mobile terminal in accordance with one exemplary embodiment;

FIG. 3 is an overview showing the control method for the mobile terminal in accordance with the one exemplary embodiment.

In accordance with the one exemplary embodiment, the mobile terminal 100 may include a display unit 151 (see FIG. 3) provided on one surface, for example, a front surface thereof. The display unit 151 may be sensitive to a touch input.

According to the control method, a folder, which includes at least one application displayed on the display unit 151, is generated (S100).

For example, referring to FIG. 3, the controller 180 generates a folder to include 1^{st} to 3^{rd} applications 210, 220 and 230, which were selected by a user from 1^{st} to 7^{th} applications 210 to 270 displayed using icons on the display unit 151.

The applications may be downloaded from an external service via wired or wireless communications or installed in a memory 160 (see FIG. 1). The applications, as shown in FIG 3, may be displayed using the icons on the display unit 151.

The folder is a box for storing programs or files on a graphic user interface. The folder may be displayed on a screen using an icon in a shape like a file folder.

The folder may be generated by the controller 180 or in response to a user selection. For example, the folder may be generated when a user selects a folder generating button 410 displayed on the display unit 151. Alternatively, the folder may be generated by moving an icon of an application displayed on the display unit 151 onto an icon of another application to overlap the icons each other.

As aforementioned, once the folder including the applications is generated by the user selection (S100) (see FIG. 2), then the controller 180 may set a representative image of the folder (S200).

The representative image may be set based on the generation of the folder, for example, by a folder generation command, or set by a user selection after generation of the folder. Meanwhile, upon the representative image is set, the folder is displayed on the display unit 151 using the representative image.

For example, referring to FIG. 3, when a folder including the first to third applications 210, 220 and 230 is generated by the user selection, the controller 180 may set a representative image to be displayed on the folder.

The representative image may be set by the user selection, or a default image set by the controller 180 may be set to the representative image.

For example, a representative image 311 of a folder 310, which includes the first to third applications 210, 220 and 230 shown in FIG. 3, namely, Facebook, Twitter and text message applications, may be displayed with a picture that two people talk to each other.

The representative image may be automatically set by the controller 180 using an image corresponding to a type of application included in the folder. Alternatively, the lately stored image in the memory 160 (see FIG. 1) may be automatically set as a representative image according to the setting of the controller 180.

In the meantime, when the representative image is set by the user selection, the controller 180 may display an image selection window for allowing the user to select a representative image as soon as generating the folder. Then, upon the user selecting an image, the controller 180 may display the selected image as the representative image.

As such, when the representative image of the folder is set by the user or the controller 180 (S200) (see FIG. 2), then the controller 180 may display the folder on the display unit 151 using the set representative image (S300).

For example, still referring to FIG. 3, when the representative image 311 is set by the controller 180 or the user, the controller 180 displays the folder 310, which includes the first to third applications 210, 220 and 230, using the representative image 311.

The displaying of the folder 310 using the representative image 311 leads to the reduction of complexity of the display, which is caused due to the icons of the applications 210, 220 and 230 being all displayed.

Upon detecting a user selection, for example, a touch input on the representative image 311, the controller 180 may output icons of the applications 210, 220 and 230 included in the folder 310, which corresponds to the selected representative image 311, on the display 151 (S400) (see FIG. 2).

The icons of the applications 210, 220 and 230 included in the folder 310 may be displayed within a region of the display unit 151 where the folder 310 is displayed or on a separate display window outside the region.

When the icons are displayed within the region where the folder 310 is displayed on the display unit 151, the representative image 311 displayed on the folder 310 may be converted into the icons and the icons are displayed.

Here, the folder-displayed region may be preset on the display unit 151, and the size of the region may change depending on the number of applications included in the folder or user settings.

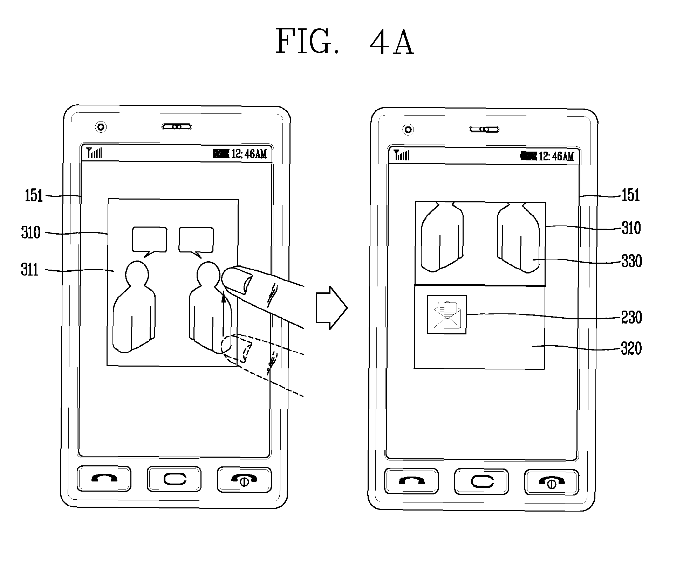

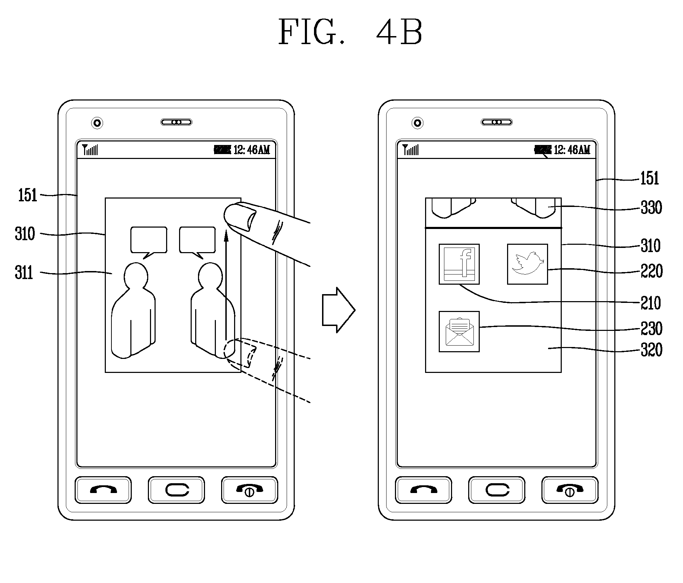

Hereinafter, description will be given of a method for converting a representative image displayed on a folder into icons of applications included in the folder, with reference to FIGS. 4A and 4B.

FIGS. 4A and 4B are overviews showing a method for displaying icons included in a folder in the mobile terminal in accordance with the one exemplary embodiment.

As mentioned above, when the folder 310 is displayed with the representative image 311, the controller 180 may output the icons of the applications 210, 220 and 230 included in the folder 310 based upon a user selection.

Here, the user selection may be an input that clicks the representative image 311 via the user input unit 130 or an input that touches the touch-sensitive display unit 151.

As one exemplary method for displaying icons of applications included in a folder, the controller 180 may display the representative image 311 and simultaneously output the icons of the applications 210, 220 and 230 on an output window present on a different region from the region where the representative image 311 is displayed.

Also, as another exemplary method for displaying icons of applications included in a folder, the icons of the applications 210, 220 and 230 may be displayed on the same region as the region where the representative image 311 is displayed.

For example, when a touch input such as single touch or a double touch is detected on the region where the representative image 311 is displayed, the controller 180 may display the icons of the applications included in the folder, other than the representative image 311, on the touch-detected region.

The controller 180 may display the icons of the applications included in the folder according to a touch distance (length) and a touch direction of a touch input, given in a manner of sliding, flicking or dragging the representative image 311.

For example, as shown in FIG. 4A, when detecting a user's touch input given by sliding the representative image 311, which indicates the folder 310 on the display unit 151, then the controller 180 may detect the slid direction and distance (length) of the touch input.

If it is detected that the slid direction of the touch input, for example, heads for an upper end of the display unit 151 and the slid distance of the touch input is about a half of the length of the folder 310, then the controller 180 slides about a half of the representative image 311 toward the upper end of the display unit 151.

That is, the folder 310 may include a first region 320 for displaying the icons of the applications and a second region 330 for displaying the representative image 311, and the controller 180 may change the sizes of the first and second regions 310 and 320 according to the direction and distance of the user's touch input.

The sizes of the first and second regions 310 and 320 may cooperatively change, and change in cooperation with the slid direction and distance of the representative image 311 displayed on the second region 320.

Therefore, when it is detected that the user slides the region, at which the folder 310 is displayed, toward the upper end of the display unit 151 by a half of the length of the folder 310, the controller 180 may divide the first region 320 where the icons are displayed and the second region 330 where the representative image 311 is displayed at a rate of 1:1.

On the first region 320 may be displayed some icons of the applications or all of icons of the applications included in the folder 310 by being reduced in size to correspond to the size of the first region 320, according to positions of the applications 210, 220 and 230 included in the folder 310.

The controller 180 may change the sizes of the first and second regions 320 and 330 based upon the touch input onto the representative image 311 displayed on the second region 330 after dividing the region of the folder 310 into the first and second regions 320 and 330.

As shown in FIG. 4B, the folder 310 may be divided into the first and second regions 320 and 330 according to the direction of the touch input with respect to the representative image 311, and the sizes of the first and second regions 320 and 330 may change based on the distance of the touch input.

As aforementioned, according to the mobile terminal and the control method thereof, the representative image displayed on the folder can be converted into an icon(s) of an application(s) by a single touch, a double touch or the like. Also, the representative image displayed on the folder can be partially converted using a touch input given by sliding, dragging, flicking and the like.

Hereinafter, description will be given of a method for performing various functions of the folder responsive to various touch inputs detected on the folder.

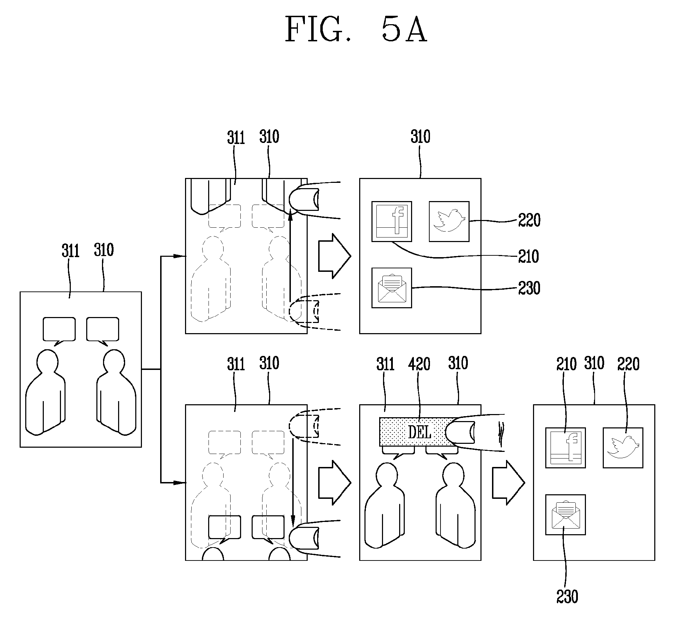

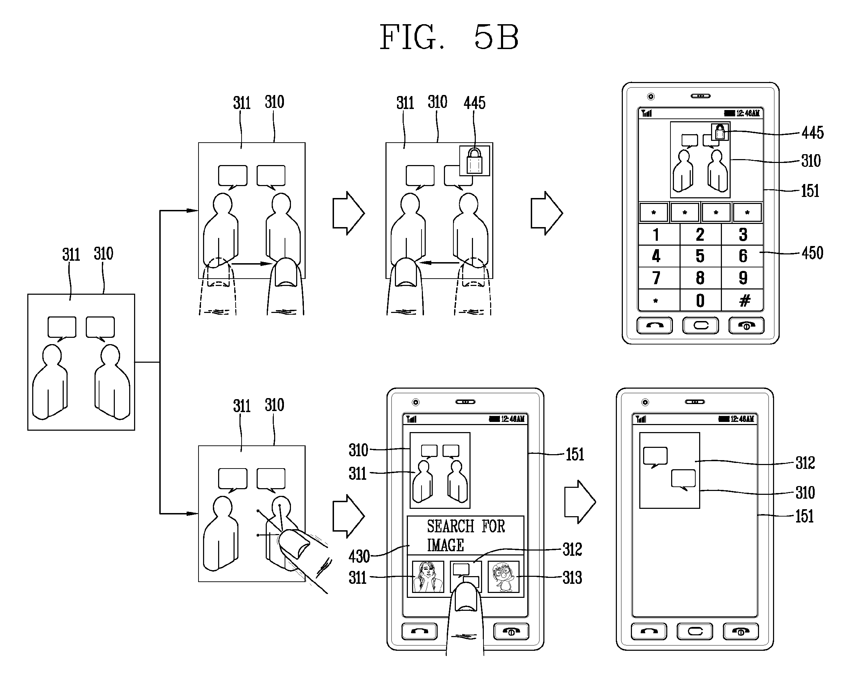

FIGS. 5A and 5B are overviews showing various functions of a folder according to touch inputs in the mobile terminal.

For more detailed description of functions of the folder, the folder 310 shown in FIG. 3 will be examined in an enlarged state, with reference to FIGS. 5A and 5B.

First, the folder 310, as previously mentioned, includes a plurality of applications.

Also, the folder 310 is displayed on the display 151 (see FIG. 3) using the representative image 311 selected by a user or the controller 180. Meanwhile, it has been described that when detecting a user selection with respect to the representative image 311, the controller 180 converts the representative image 311 into icons of applications included in the folder 310.

Also, in addition to the function of converting the representative image into the icons of the applications, the controller 180 may provide various functions in relation to the folder 310 based upon a touching manner.

For example, the controller 180 may provide a representative image deleting function, by which the representative image 311 of the folder 310 is deleted and the icons of the applications included in the folder 310 are immediately displayed, a representative image setting function of changing the representative image, and the like.

Also, in addition to those functions, the controller 180 may further provide various functions, such as a folder moving function of moving the folder to a different region, a folder locking function of setting a condition for opening the folder, a folder unlocking function of unlocking the folder in correspondence with the locking function, and the like.

Meanwhile, the controller 180 may set those functions to be provided according to a manner of selecting the folder 310. For example, the controller 180 may control different functions to be performed in relation to the folder 310 using different types of touch inputs.

In relation to the structure, referring to FIG. 5A, when detecting a touch input that upwardly slides the representative image 311 displayed on the folder 310, the controller 180 may convert the representative image 311 of the folder 310 into the icons of the applications 210, 220 and 230 included in the folder 310.

When detecting a touch input that downwardly slides the representative image 311 of the folder 310, the controller 180 may output a select window 420 to delete the representative image 311 of the folder 310. Also, when a user selects the select window 420, the representative image 311 of the folder 310 is deleted and the icons of the applications included in the folder 310 are then displayed.

Referring to FIG. 5B, when detecting a touch input of sliding the folder 310 from left to right, the controller 180 sets a condition for opening the folder 310 so as to perform a locking function. Here, in order to indicate the active state of the locking function, a 'lock' icon 445 may be displayed on the representative image 311.

Here, the condition for releasing the locking function may be a number or touch input preset in the terminal. Also, the condition may be set by a user while executing the locking function with respect to the folder 310.

The preset touch input may be a touch input moving in a specific direction, for example, a touch input of drawing a circle, and a touch input of drawing a figure with a set shape.

Next, after executing the locking function for the folder 310, upon detecting a touch input of sliding the folder from left to right directions, the controller 180 may output a window 450 for allowing a user to input the condition for unlocking the folder 310.

Upon detecting a double touch on the folder 310, the controller 180 may output an image select window 430 for changing the representative image 311, and set an image selected by the user via the image select window 430 as a representative image 312 to be displayed on the folder 310.

As shown in FIGS. 5A and 5B, the controller 180 may execute a function, which corresponds to a set touch and is associated with the folder, in response to the set touch input.

That is, the controller executes a first function associated with a folder upon detecting a first touch input on a representative image, while executing a second function associated with the folder upon detecting a second touch input on the representative image.

Next, description will be given of a method for indicating a generation of an event on a folder when the event is generated in an application included in a folder.

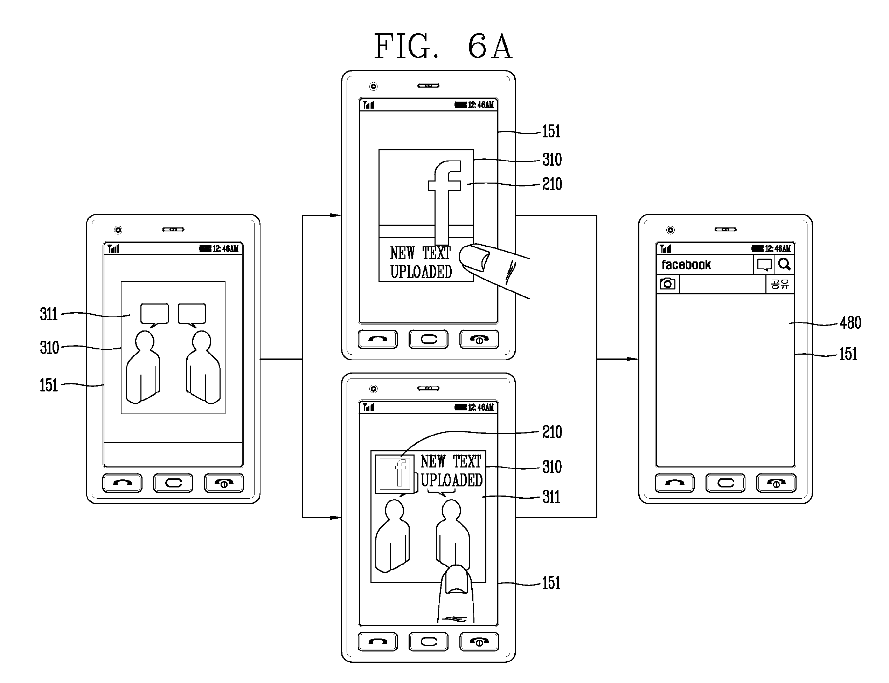

FIGS. 6A to 6C are overviews showing a method for displaying an application with a new event generated therein in the mobile terminal.

When at least one new event is generated in at least one of the applications included in the folder 310 of the mobile terminal according to the one exemplary embodiment, information related to the applications where the event has been generated may be displayed on the folder 310.

Here, the event may indicate a reception of new information from an external server or an inner system to an application. So, a variety of events may be generated according to types of applications.

For example, instant messages may be often generated in messenger-related applications, and stock information may be generated as events in stock-related applications.

Meanwhile, this specification may provide a user with information related to an event via a folder by displaying information related to an application where an event has been generated on the folder.

First, as one example, referring to FIG. 6A, when an event is generated in the application 210 included in the folder 310, which is displayed with the representative image 311 on the display unit 151, the controller 180 may convert the folder 310 into an icon of the event-generated application 210.

For example, if it is assumed that the event-generated application 210 is an application associated with a Social Network Service (SNS) site, when an event that a new text is uploaded is generated in the application 210, the controller 180 receives the event and displays the icon of the application 210 on the folder 310.

The controller 180 may also display on the folder 310 information related to the event, for example, 'new text uploaded' together with the icon of the application 210, thereby providing a user with the event related information.

When an event is generated in an application included in the folder, the controller 180 may convert the folder screen on which the representative image is displayed in order to display the applications included in the folder. Here, the controller 180 may set the representative image to be disappeared in a sliding manner to make a user visually feel more interested.

That is, the screen of the folder 310, as aforementioned, which displays the representative image 311, may be entirely converted into the icon of the event-generated application 210. Also, referring to FIG. 6A, the icon of the event-generated application 210 may be displayed with overlapping the representative image 311.

Also, the controller 180 may execute the event-generated application 210 upon detecting a user selection, for example, a touch input with respect to the folder 310 including the event-generated application 210. Therefore, the screen of the display unit 151 may change into an application execution screen 480 for executing the corresponding application 210.

Here, the touch input may be set to be detected with respect to a preset region of the folder or set to be a touch input having a preset direction or form. For example, it may be set such that the application 210 can be executed only when 'double touch' is input.

Thus, as the touch input for a function of executing an application in response to selection of a folder is set to be detected with respect to a specific region or have a specific direction or form, such function can be distinguished from various other functions to be executed in the folder.

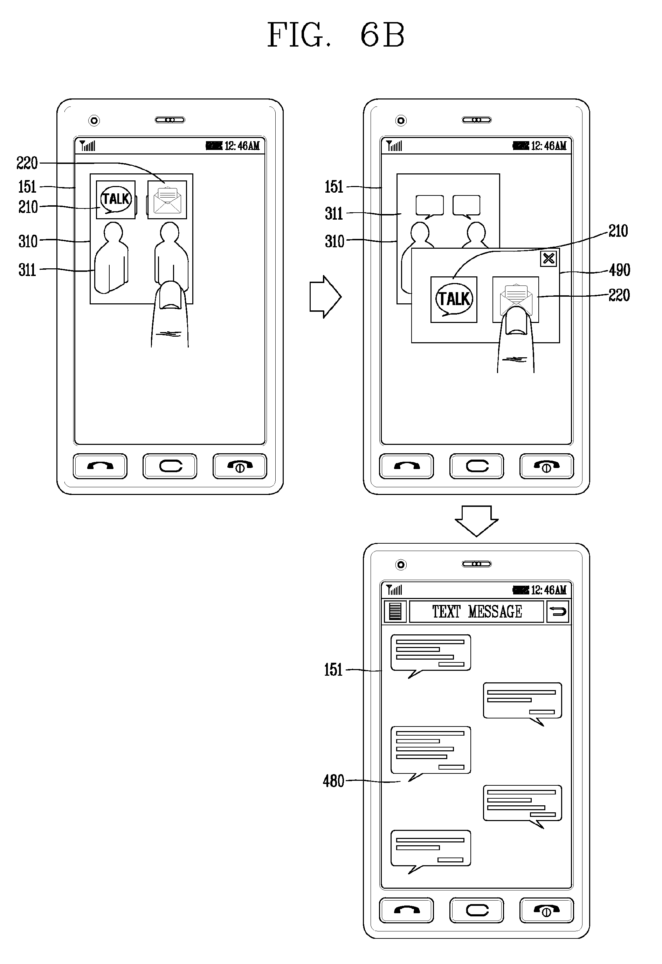

As another exemplary embodiment, description will be given of a case where events have been generated in a plurality of applications among the applications included in the folder, with reference to FIG. 6B.

Referring to FIG. 6B, when events are generated from the first and second applications 210 and 220 included in the folder 310, icons of the event-generated first and second applications 210 and 220 are displayed on the folder 310 with overlapping the representative image 311, which is already displayed on the folder 310.

Upon detecting a user selection with respect to one of the first and second applications 210 and 220 displayed on the representative image 311, the controller 180 may convert the screen of the display unit 151 into an application execution screen 480 so as to allow for executing a function of the corresponding application.

Also, for providing a user with more accurate information related to the applications, upon detecting a user selection with respect to the folder 310, the controller 180 may display the icons of the event-generated first and second applications 210 and 220 and event information through a pop-up window 490 in an enlarged state. Also, when the user selects one of the enlarged information, the screen of the display unit may be converted into the execution screen 480 of the selected application.

Also, the controller 180 may set different functions to be executed when detecting a user selection on the region of the folder 310 where the first and second applications 210 and 220 are displayed or on a region except for the region where the first and second applications 210 and 220 are displayed.

For example, when a user selection is detected on the region where the first and second applications 210 and 220 are displayed, the corresponding applications are immediately executed. On the contrary, when a user selection is detected on the region except for the region where the first and second applications 210 and 220 are displayed, the first and second applications 210 and 220 and event information may be displayed in the enlarged state.

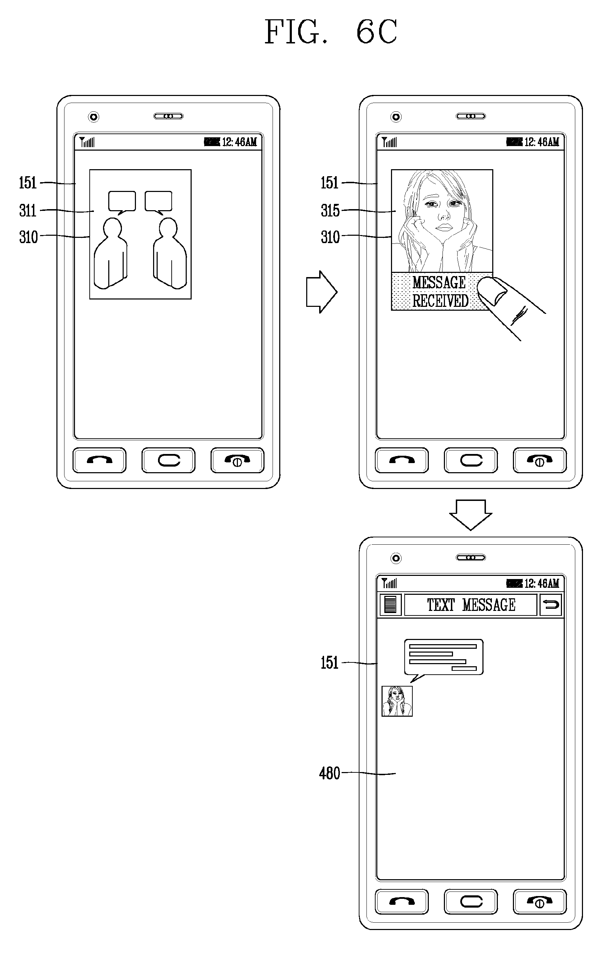

Concerning about another example of displaying event information on the folder, referring to FIG. 6C, when an event is generated in an application, the controller 180 may analyze a subject that generates the event from the event-generated application, thereby displaying the analyzed result on the folder 310.

For example, in case where the event-generated application is an application associated with an instant message, upon receiving a message from a particular person, the controller 180 may analyze the person who has sent the message. Also, after completion of the analysis, the controller 180 may collect information related to the person who has sent the message from the memory 160 (see FIG. 1) or a server associated with the application.

The collected information may include name, age, photo, job, address, telephone number and the like, and the controller 180 may display a photo 315 of the collected information on the folder 310, instead of the representative image 311. Also, the other collected information except for the photo 315 may also be displayed on the folder 310 together with the photo 315.

Next, when a user selection is detected on the photo 315 displayed on the folder 310, the controller 180 may convert the screen of the display unit such that a function of the corresponding application can be executed.

As described above, the mobile terminal can display information on an event-generated application on a folder and set a direct conversion from the folder into an execution screen of the corresponding application, thereby enhancing user's accessibility to the event-generated application.

Hereinafter, description will be given of a method for setting a representative image according to a type of application.

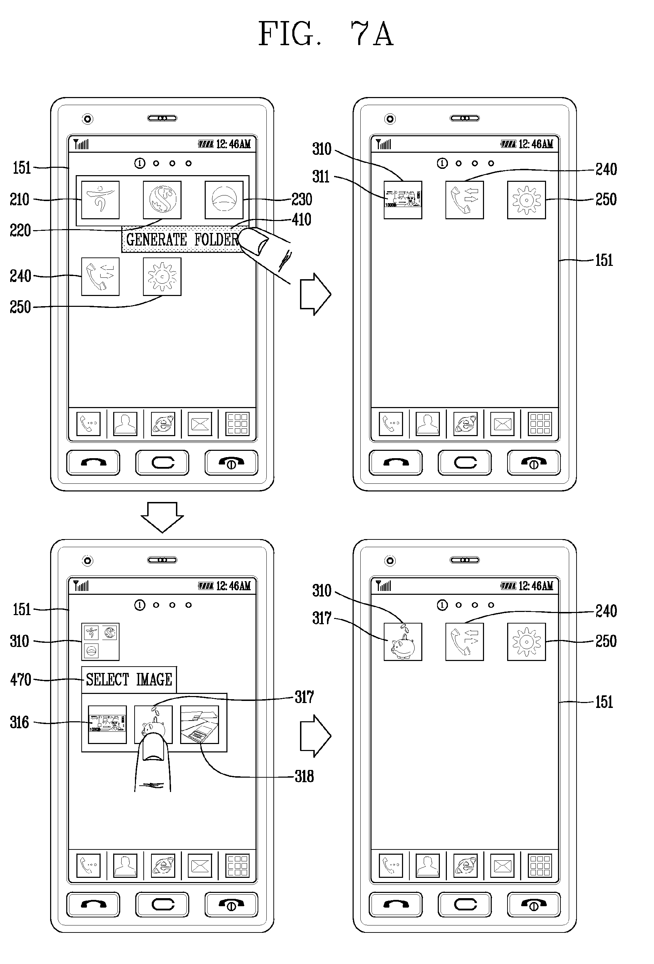

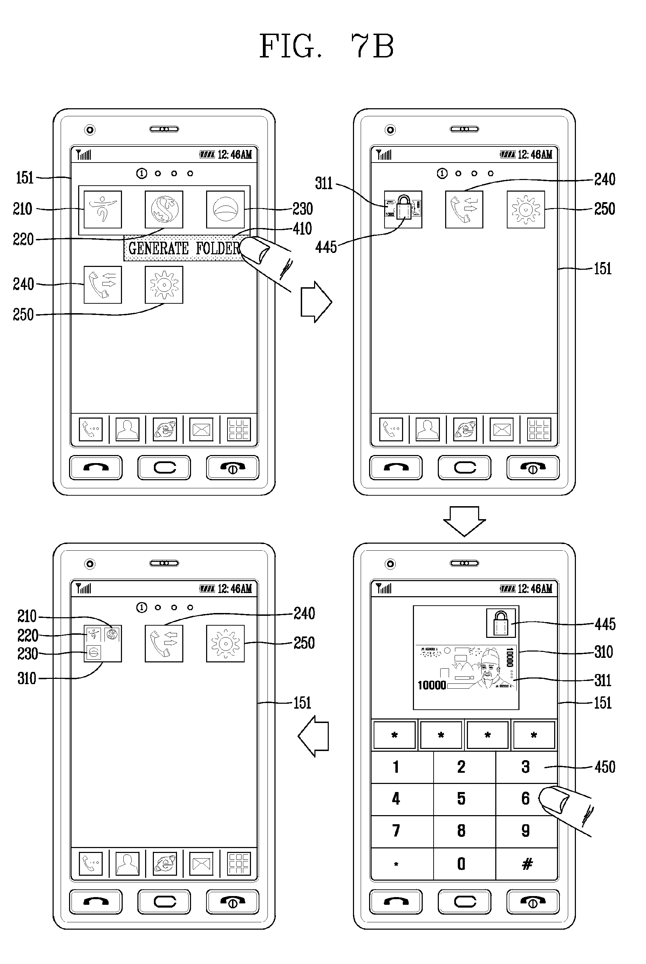

FIGS. 7A and 7B are overviews showing a method for setting a representative image according to a type of application in the mobile terminal.

It has been described that the representative image displayed on the folder can be set by the user or controller 180. Hereinafter, a method for setting a representative image by a controller 180 will be concerned.

When displaying the representative image 311 on the folder 310 in the mobile terminal according to this specification, the controller may first analyze types of applications included in the folder 310.

The types of applications may indicate, for example, categories such as finance, messaging, reading, game and the like. The controller 180 may set a representative image displayed on the folder 310 as an image corresponding to the type of application.

That is, the controller 180 may analyze a type of application and retrieve an image associated with the analyzed type from the memory 160 (see FIG. 1). Here, the controller 180 may retrieve images including keywords associated with the type of application.

Namely, the images may include keywords corresponding to the type of application, and it may be represented as 'information related to object was tagged.'

The tag is a set of keywords including words indicating characteristic, type, meaning, title and the like of an application, for example. The tag may be input by a user or the tag itself may be included in an image.

Also, the tag information or keyword may be expressed using metadata. The metadata, for example, is data explaining an image and used for efficient search for information on the tag or keyword.

In the meantime, upon retrieving an image associated with the type of application, the controller 180 sets the retrieved image as the representative image of the folder 310.

For example, referring to FIG. 7A, upon generating a folder including first to third applications 210, 220 and 230 associated with finance, the controller 180 retrieves an image associated with the corresponding applications, and sets a 'money' image retrieved, associated with 'finance,' as the representative image 311.

As one example, upon a plurality of images retrieved, the controller 180 estimates priorities thereof based on a preset reference, for example, at least one reference of setting frequency, latest saved date, latest used date and the like, and sets an image having the higher priority, determined according to the estimation result, as the representative image.

Upon a plurality of image 316, 317 and 318 retrieved, as another example, the controller 180 may display the retrieved plural images 316, 317 and 318 to a user via a pop-up window 470. After the user selects one of the images, the controller 180 may set the selected image as the representative image 311 of the folder 310.

Also, referring to FIG. 7B, the controller 180 may analyze a type of application included in the folder. When the analyzed type of application is an application corresponding to a preset reference, the controller 180 sets such that the user should input information corresponding to a preset condition. When the preset condition is satisfied, the folder is allowed to be unlocked.

For example, applications associated with finance, diary, memo, message and the like are associated with personal lives and thus should be kept secured. Therefore, an access to the corresponding applications by the others should be restricted.

A type of application needing an input of a set condition with respect to the folder may be selected by a user or fixed by an automatic setting of the controller.

Also, the preset condition for unlocking the folder may be a preset number, such as a password set in the terminal, or a preset touch input, such as a touch input of drawing a shape like 'star.'

The condition for opening the folder may be set by the user, or be set to receive a user input based on generation of the folder.

Hence, referring to FIG. 7B, upon generating a folder including finance-related applications, the controller 180 may display 'lock' image 445, which indicates that the folder 310 is in a locked state, on the representative image 311. Also, when the representative image 311 is selected by the user, an input window for inputting a preset condition, for example, a password input window is displayed on the display unit 151. When a password is input on the input window 360, the applications included in the folder 310 are displayed.

As such, the mobile terminal according to this specification can make the others difficult to access applications, which should be protected and secured in terms of personal lives, by virtue of the locking function of the folder.

Hereinafter, description will be give of a method for setting the same image as a representative image of a plurality of folders and displaying the set image in a consecutive manner.

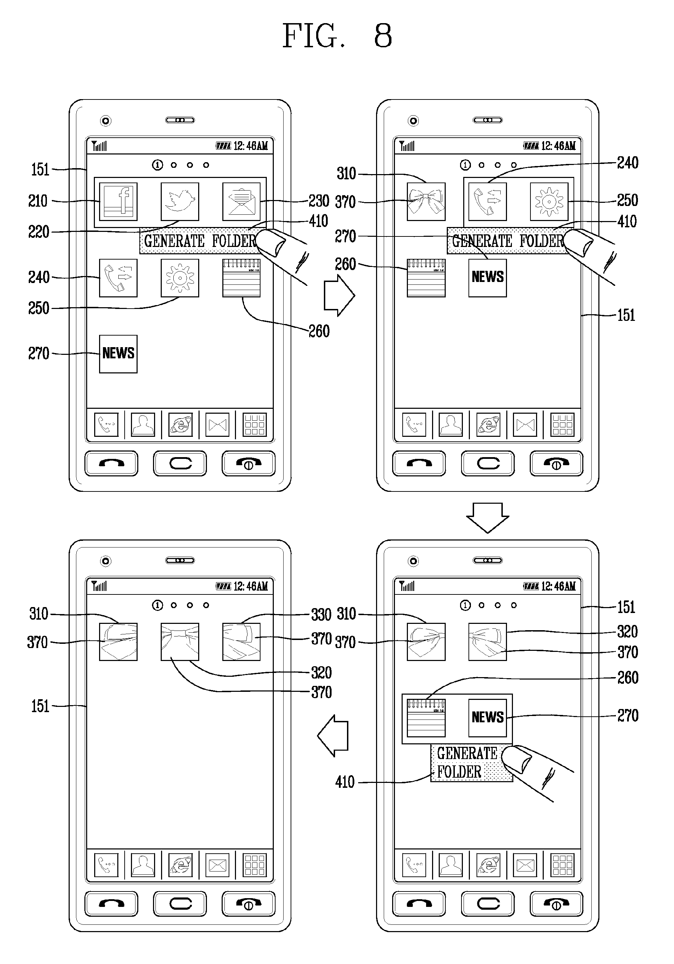

FIG. 8 is an overview showing a method for setting the same image as a representative image of a plurality of folders in the mobile terminal.

It has been described that the representative image displayed on the generated folder is set by a user or the controller 180 (see FIG. 1). When the same image is set by a user or the controller 180 as a representative image of plural folders, then the controller 180 may set the plural folders to be displayed with the same image, thereby giving a user visual fun.

For example, among first to seventh applications 210 to 270, an image 370 selected by a user or the controller 180 is set as a representative image with respect to a first folder 310 including the first to third applications 210, 220 and 230.

Next, after generating a second folder 320 including the fourth and fifth applications 240 and 250, when the same image as the image selected in the first folder is selected as the representative image of the second folder 320, the controller 180 may segment the image 370 into halves to be displayed on the first and second folders 310 and 320, respectively.

Next, after generating a third folder 330 including the sixth and seventh applications 260 and 270, when the same image as the image selected in the first and second folders 310 and 320 is selected as the representative image of the third folder 330, the controller 180 may segment the image 370 into three parts to be displayed on the first to third folders 310 to 320, respectively.

As such, when the same image is set as a representative image with respect to plural folders, the image may be displayed in a segmenting manner, thereby giving a user visual fun.

As described above, in accordance with the mobile terminal and the control method thereof according to the exemplary embodiments, applications can be stored in a folder and the folder can be displayed with a representative image, thereby reducing complexity which is caused due to icons displayed.

Also, in accordance with the mobile terminal and the control method thereof according to the exemplary embodiments, a representative image associated with an application may be displayed on a folder, to provide intuitive information related to the application included in the folder.

The mobile terminal and the control method thereof according to the exemplary embodiments can allow for protection of a user's personal life by virtue of a locking function of a folder.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A method for controlling a mobile terminal comprising:
generating a folder including at least one application;
setting a representative image of the folder and displaying the folder on a display unit(151) using the set representative image; and
outputting an icon of the application included in the folder, in response to selection of the representative image.

2. The method of claim 1, wherein the display representative image is converted into the icon of the application when the representative image is selected.

3. The method of claim 2, wherein the conversion is carried out as the representative image is slid.

4. The method as claimed in any one of the preceding claims, wherein the folder comprises a first region where the icon of the application is displayed, and a second region where the representative image is displayed,
wherein preferably sizes of the first region and/or the second region change in cooperation with each other, preferably the size change is based on sliding of the representative image.

5. The method of claim 4, wherein the sliding is based on a touch input given by one of sliding, flicking and dragging with respect to the representative image.

6. The method as claimed in any one of the preceding claims, wherein a first function associated with the folder is executed when a first touch is input on the representative image,
wherein a second function associated with the folder is executed when a second touch is input on the representative image, the first touch and the second touch being different from each other.

7. The method of claim 6, wherein the function is one of a folder locking function, a folder unlocking function, a folder moving function, a representative image setting function, a representative image deleting function and a folder displaying converting function.

8. The method as claimed in any one of the preceding claims, wherein when an event is generated in the application included in the folder, the displayed representative image is converted into an icon of the event-generated application, or the icon of the event-generated application is displayed with overlapping the representative image.

9. The method of claim 8, wherein when a touch input is detected on the folder including the event-generated application, the event-generated application is executed.

10. The method of claim 9, wherein when events are generated from a plurality of applications, icons of the event-generated applications are displayed in an enlarged state, in response to a touch input with respect to the folder including the event-generated applications,
wherein a screen of the display unit is converted into an execution screen of an application corresponding to one selected icon of the enlarged icons.

11. The method as claimed in any one of the preceding claims 8-10, wherein event information related to contents of the event is displayed on the folder.

12. The method as claimed in any one of the preceding claims, wherein at the displaying step, a type of application included in the folder is analyzed, an image associated with the analyzed type is retrieved, and the retrieved image is set as the representative image.

13. The method of claim 12, wherein when a plurality of images are retrieved, one of the retrieved images is set as the representative image based on at least one reference of setting frequency, saved date and used date of the retrieved images , or the retrieved plurality of images are displayed, and one of the displayed images selected by a user is set as the representative image.

14. The method as claimed in any one of the preceding claims, wherein at the folder generating step, when the type of application included in the folder satisfies a preset reference, a condition to open the folder is set for the folder.

15. A mobile terminal comprising:
a display unit(151) to display a folder including at least one application using a preset representative image; and
a controller(180) to convert the representative image into an icon of the application included in the folder when the displayed representative image is selected.
